# EUROPÄISCHE PATENTSCHRIFT

(11) **EP 2 072 383 B1**
(45) Veröffentlichungstag und Bekanntmachung des Hinweises auf die Patenterteilung: **12.05.2010**
(21) Anmeldenummer: 07123792.9
(22) Anmeldetag: 20.12.2007
(51) Int. Cl.: B62D 53/12

(54) **Steckverbindungsanordnung für Sattelkupplungen**
Connector assembly for fifth wheels
Agencement de connecteur à fiches pour sellettes d'attelage

(43) Veröffentlichungstag der Anmeldung: 24.06.2009
(73) Patentinhaber: SAF-HOLLAND Verkehrstechnik GmbH, 78224 Singen-Hohentwiel (DE)
(72) Erfinder: Hurst, Frank, 77704 Oberkirch (DE); Riesterer, Michael, 78247 Hilzingen (DE); Neumeister, Ralph, 78256 Steisslingen (DE); Panke, Harald, 63856 Bessenbach (DE)
(74) Vertreter: Bauer, Clemens

(56) Entgegenhaltungen:
- EP-A- 0 058 075
- WO-A-03/078238
- DE-T2- 60 102 393
- DE-U1-202006 001 264
- US-A1- 2005 253 360

## Beschreibung

Die Erfindung bezieht sich auf eine Steckverbindungsanordnung für Sattelkupplungen umfassend ein Steckverbinderoberteil, das im Königszapfen eines Sattelaufliegers angeordnet ist und ein Steckverbinderunterteil, das in der Sattelkupplungsplatte eines Zugfahrzeuges angeordnet ist, wobei das Steckverbinderoberteil und das Steckverbinderunterteil jeweils zu einander steckverbindbare elektrische und pneumatische oder hydraulische Leitungen aufweist.

Bei grösseren Kraftfahrzeugen wird der Sattelauflieger mit dem Zugfahrzeug mittels einer Sattelkupplung gekuppelt. Die Sattelkupplung umfasst im Wesentlichen eine Sattelkupplungsplatte mit einer Schliessvorrichtung am Zugfahrzeug und einen so genannten Königszapfen am Sattelauflieger. Ausser dieser mechanischen Verbindung müssen weitere, wie z.B. elektrische, hydraulische und pneumatische Verbindungen zwischen dem Zugfahrzeug und dem Anhänger hergestellt werden. Üblicherweise werden, wegen der Beweglichkeit des Sattelzuges, diese Verbindungen über flexible Leitungen einzeln zusammengesteckt. Das ist für den Fahrer beim Kuppeln und Entkuppeln des Sattelzuges aufwändig und zeitraubend.

Aus der EP 1240067 B1 ist eine Sattelkupplung mit einer Verbindungsanordnung zur Verbindung von elektrischen und pneumatischen Leitungen bekannt. Der Königszapfen am Sattelauflieger ist mit einer axialen Bohrung ausgebildet, in die, von der Achse des Königszapfens aus gesehen, eine elektrische Verbindungsanordnung für Gleichspannung und konzentrisch dazu eine Verbindungsanordnung für elektronische Datenübermittlung vorgesehen ist. Radial weiter aussen liegend ist in einem Ringzylinderraum die Kupplung der Druckluftleitungen vorgesehen. Am Zugfahrzeug ist in einem Bereich, der beim Kupplungsvorgang unterhalb des Zapfens liegt, ein Versorgungsteil mit komplementären Verbindungsanordnungen ausgebildet.

Diese Anordnung ist bei den Betriebsbedingungen, die in der Sattelkupplung herrschen, äußerst empfindlich für Beschädigungen und Verschmutzungen, die zu Fehlfunktionen führen können. Bei den größeren und schwereren Sattelzügen ist der Ringzylinderraum für die benötigte Druckluft nicht mehr ausreichend. Vor allem die Bremsanlagen der modernen Sattelauflieger benötigen eine große Luftdurchflussmenge bei kurzen Ansprechzeiten des Druckluftbremssystems.

Die EP 0 058 075, die den Oberbegriff des Anspruchs 1 definiert, und die US 2005/0253360 offenbaren Steckverbindungsanordnungen für Sattelkupplungen mit einem Königszapfen und einer Sattelplatte, welche drehbeweglich zueinander angeordnet sind, wobei die Steckverbindungsanordnungen ausgebildet sind, elektrische Signale und pneumatischen oder hydraulischen Druck zu übertragen.

Es ist Aufgabe der vorliegenden Erfindung, einen Königszapfen eines Sattelaufliegers vorzusehen, welcher in Steckverbindungsanordnungen für Sattelkupplungen mit größeren pneumatischen Bremsanlagen universell einsetzbar ist, wobei bei möglichst kleinem Bauraum ein großer Strom- und Luftdurchsatz bei kurzen Ansprechzeiten gewährleistet wird.

Diese Aufgabe wird durch einen Königszapfen eines Sattelaufliegers gemäß Anspruch 1 gelöst. Bevorzugte Ausführungsformen ergeben sich aus den abhängigen Ansprüchen.

Erfindungsgemäß ist ein Königszapfen eines Sattelaufliegers vorgesehen, umfassend ein Steckverbinderoberteil, welches elektrische und pneumatische oder hydraulische Leitungen aufweist, die mit elektrischen und pneumatischen oder hydraulischen Leitungen eines Steckverbinderunterteils, welches in der Sattelplatte eines Zugfahrzeugs angeordnet ist, steckverbindbar sind, wobei die Leitungen als ringförmig angeordnete Steckerbuchsen ausgebildet sind, wobei die größte Leitung einen Außendurchmesser größer als 50 % des Königszapfendurchmessers gemessen am geringsten Durchmesser aufweist, **dadurch gekennzeichnet, dass** zwischen einer als Vorratsluftleitung ausgebildeten Leitung und einer als Bremsluftleitung ausgebildeten Leitung eine als Ableitungskanal ausgebildete Leitung zur Ableitung von Leckluft ins Freie angeordnet ist, oder dass zwischen der als Vorratsluftleitung ausgebildeten Leitung und der als Bremsluftleitung ausgebildeten Leitung ein Leitungstrennmantel angeordnet ist, dessen Raum als Ableitungskanal genutzt werden kann. Vorteilhafterweise umfasst eine Steckverbindungsanordnung für Sattelkupplungen ein Steckverbinderoberteil, das im Königszapfen eines Sattelaufliegers angeordnet ist und ein Steckverbinderunterteil, das in der Sattelplatte eines Zugfahrzeuges angeordnet ist, wobei das Steckverbinderoberteil und das Steckverbinderunterteil jeweils zueinander steckverbindbare elektrische und pneumatische oder hydraulische Leitungen aufweist, wobei die Leitungen als ringförmig angeordnete Steckerbuchsen ausgebildet sind, und wobei die größte Leitung einen Außendurchmesser größer als 50 % des Königszapfendurchmessers gemessen am geringsten Durchmesser aufweist.

Es ist von Vorteil, dass ein Überströmen zwischen den Luftleitungen verhindert wird. Dies wird dadurch erreicht, dass die Vorratsluftleitung räumlich getrennt von der Bremsluftleitung angeordnet ist. Dies wird auch dadurch erreicht, dass zwischen der Vorratsluftleitung und der Bremsluftleitung einen Überströmkanal angeordnet ist.

Es ist auch von Vorteil, dass in der Steckverbindungsanordnung möglichst viel Platz für die pneumatischen Leitungen zur Verfügung steht. Dies wird dadurch erreicht, dass die elektrische Daten- und/oder Spannungsversorgungsleitungen im Leitungstrennmantel zwischen der Vorratsluftleitung und der Bremsluftleitung angeordnet sind.

Ausführungsbeispiele der Erfindung werden anhand der Figuren beschrieben. Es zeigen:
Figur 1 einen Schnitt durch eine erfindungsgemässe Steckverbindungsanordnung,
Figur 2 einen Schnitt durch eine weitere erfindungsgemässe Steckverbindungsanordnung und
Figur 3 einen Schnitt durch eine weitere erfindungsgemässe Steckverbindungsanordnung.

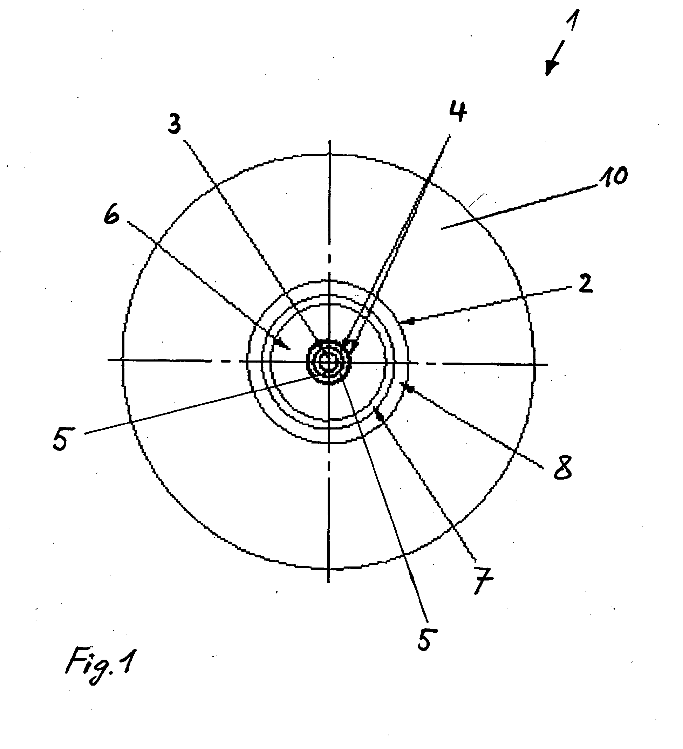

In Figur 1 ist schematisch eine Steckverbindungsanordnung 1 in einem Königszapfen 10 eines hier nicht dargestellten Sattelaufliegers dargestellt. Figur 1 zeigt den Königszapfen 10 geschnitten senkrecht zur Zapfenachse. Im Königszapfen 10 ist eine zentrale Bohrung 2 ausgebildet. Die Bohrung 2 hat einen Durchmesser, der grösser ist als der halbe Durchmesser des Königszapfens 1, gemessen am geringsten Durchmesser.

Konzentrisch mit der Achse des Königszapfens 10 sind von Innen nach Aussen elektrische Leitungen 3,4 und pneumatische Leitungen 6,7,8 dargestellt. Im Zentrum des Königszapfens 10 verläuft eine Datenleitung 3. Konzentrisch mit der Datenleitung 3 ist eine ringförmige Spannungsversorgungsleitung 4 für die Versorgung des Sattelaufliegers mit elektrischer Spannung dargestellt. Die Spannungsversorgungsleitung 4 ist durch eine ringförmige Isolationsschicht 5 von der Datenleitung 3 getrennt angeordnet.

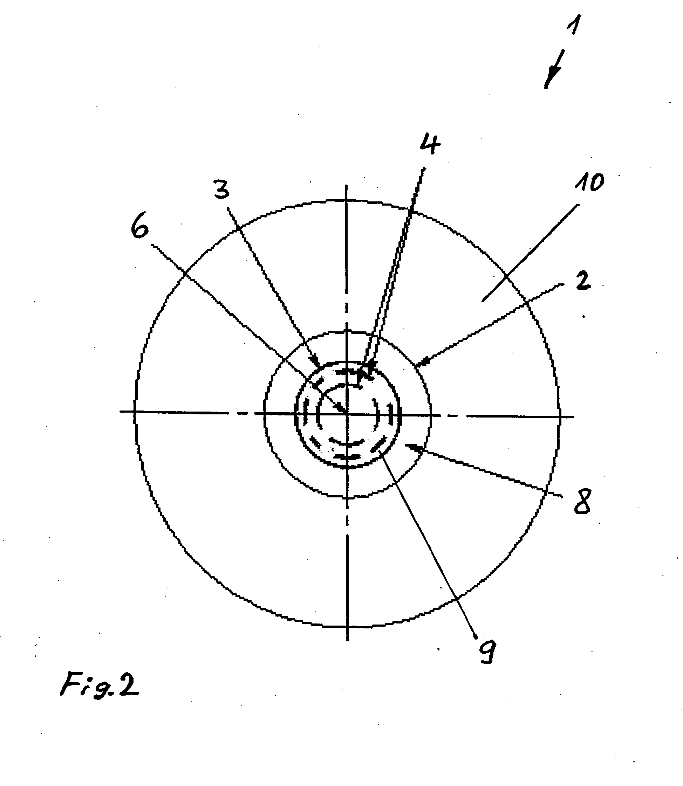

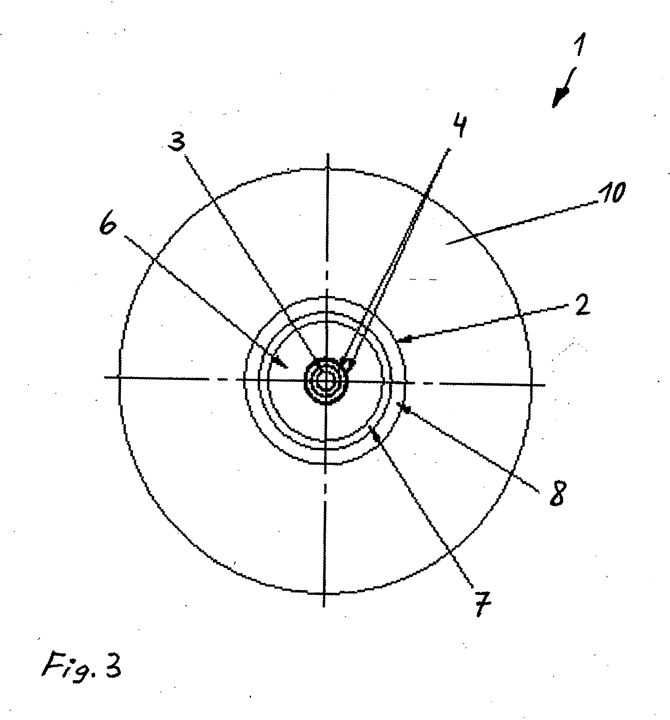

Die ringförmigen elektrischen Leitungen 3,4 sind in den Figuren 1 und 3 als einzelne Leitungen 3,4 dargestellt, können jedoch auch, wie in Figur 2 dargestellt, als mehrere am Umfang des Ringes verteilt angeordnete Teile eines Kreisbogens ausgebildet sein. Neben jedem elektrisch leitendem Kreisbogenteil ist dann ein elektrisch isolierender Kreisbogenteil ausgebildet, so dass mehrere Spannungsversorgungs- und Datenleitungen 3,4 in der Steckverbindungsanordnung 1 untergebracht werden können.

Weiter nach Aussen sind nacheinander eine Bremsluftleitung 6, einen Ableitungskanal 7 und eine Vorratsluftleitung 8 dargestellt. Der Aussendurchmesser der Vorratsluftleitung 8 beträgt mindestens 50 % des Durchmessers des Königszapfens 10, gemessen am geringsten Durchmesser.

In Figur 2 ist ein weiteres Ausführungsbeispiel der Steckverbindungsanordnung 1 geschnitten dargestellt. Die Bremsluftleitung 6 ist zentral angeordnet. Um ein Überströmen zu verhindern werden die Spannungsversorgungsleitung 4 und die Datenleitung 3 in einem Trennmantel 9 zwischen der zentral angeordneten Bremsluftleitung 6 und der radial aussen liegenden Vorratsluftleitung 8 angeordnet. Der Trennmantel 9 ist aus flexiblem Kunststoffmaterial hergestellt und kann mehrschichtig ausgebildet sein. Die Datenleitung 3 kann aus einem Metalldrahtgeflecht oder einer Metallfolie hergestellt werden. Ein zusätzlicher Ableitungskanal 7 kann in der Anordnung gemäss Figur 2 entfallen, da hier der Raum des Trennmantels 9 als Ableitungskanal genutzt werden kann, in dem eine Entlüftung nach Aussen vorgesehen ist.

In Figur 3 ist ein drittes Ausführungsbeispiel der Steckverbindungsanordnung 1 dargestellt. Die elektrische Spannungsversorgungsleitung 4 ist zentral auf der Achse des Königszapfens 10 angeordnet. Die Übertragung der Daten geschieht am Aussenmantel der Spannungsversorgungsleitung 4, der auch als Innenmantel der Bremsluftleitung 6 ausgebildet sein kann. Zwischen der ringförmig ausgebildeten Bremsluftleitung 6 und der ebenso ringförmig ausgebildeten Vorratsluftleitung 8 ist ein ringförmiger Ableitungskanal 7 zur Ableitung von Leckluft ausgebildet.

Mit dem Ableitungskanal 7 wird verhindert, dass Vorratsluft aus der Vorratsluftleitung 8 in die Bremsluftleitung 6 lecken kann. Ein unbeabsichtigter Druckaufbau in der Bremsluftleitung 6 würde dazu führen, dass die Bremsen unbeabsichtigt betätigt und heiss laufen würden und so Schäden an der Bremsanlage verursachen würden. Der Ableitungskanal 7 leitet allfällig auftretende Leckluft aus der Vorratsluftleitung 8 über eine Öffnung ins Freie.

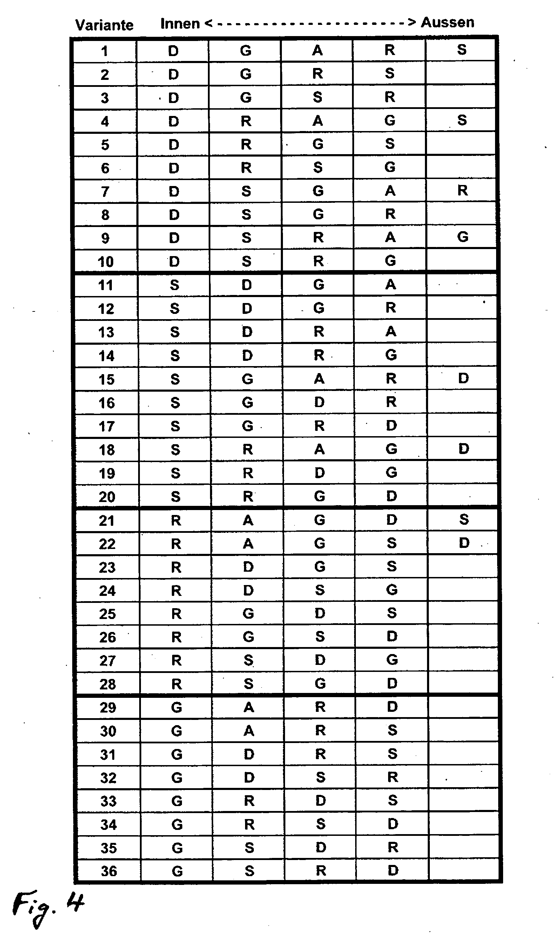

Die Abfolge der verschiedenen elektrischen und pneumatischen Leitungen kann beliebig gewählt werden. In der Tabelle von Figur 4 sind alle möglichen Kombinationen aufgelistet. Jede Zeile der Tabelle gibt an, wie die Leitungen in der Bohrung 2 von Innen nach Aussen angeordnet sind. Hierbei stehen die Buchstaben D, S, G, R und A jeweils für Datenübertragungsleitungen 3, Spannungsversorgungsleitungen 4, gelbe Bremsluftleitungen 6, rote Vorratsluftleitungen 8 und Ableitungskanäle 7.

Entscheidend ist in jedem Fall, dass zwischen der Bremsluftleitung 6 und der Vorratsluftleitung 8 kein direkter Kontakt möglich ist. Die Bremsluftleitung 6 und die Vorratsluftleitung 8 sind von einander getrennt angeordnet, entweder durch einen Leitungstrennmantel 9 oder durch einen Ableitungskanal 7.

In der hier nicht dargestellten Sattelplatte ist im Bereich unter der Aufnahmeöffnung für den Königszapfen 10 ein Steckverbindungsunterteil als Gegenstück zum Steckverbindungsoberteil 1 angeordnet. Die Ausführung des Steckverbindungsunterteils ist komplementär zur Ausbildung der jeweiligen Steckverbindungsanordnung 1 aus Figur 1, 2 oder 3. Zwischen der Sattelkupplungsplatte und dem Königszapfen 10 sind Schleifkontakte vorgesehen.

Für die Übertragung der Daten kann auch ein Datenprotokoll verwendet werden, wobei die Daten zusammen mit der Spannungsversorgung über die gleiche Spannungsversorgungsleitung 4 übertragen wird. Die Datenübertragung kann auch drahtlos und/oder berührungslos, beispielsweise mit Lichtwellenleitern oder mit Mikrowellenhohlleitern durchgeführt werden. Die Datenleitung 3 kann auch als Punkt zu Punkt-Leitung ausgebildet sein.

Mit der hier vorgeschlagenen Steckverbindungsanordnung 1 kann auch bei Sattelkupplungen für schwere und mehrachsige Sattelauflieger mit modernen Bremsanlagen gewährleistet werden, dass im Sattelauflieger jederzeit genügend Druckluft zur Verfügung steht.

## Patentansprüche

1. Königszapfen (10) eines Sattelaufliegers, umfassend ein Steckverbinderoberteil, welches elektrische und pneumatische oder hydraulische Leitungen (3, 4, 6, 7, 8) aufweist, die mit elektrischen und pneumatischen oder hydraulischen Leitungen eines Steckverbinderunterteils, welches in der Sattelplatte eines Zugfahrzeugs angeordnet ist, steckverbindbar sind,
wobei die Leitungen (3, 4, 6, 7, 8) als ringförmig angeordnete Steckerbuchsen ausgebildet sind,
wobei die größte Leitung (6, 8) einen Außendurchmesser größer als 50 % des Königszapfendurchmessers gemessen am geringsten Durchmesser aufweist,
**dadurch gekennzeichnet, dass** zwischen einer als Vorratsluftleitung (8) ausgebildeten Leitung und einer als Bremsluftleitung (6) ausgebildeten Leitung eine als Ableitungskanal (7) ausgebildete Leitung zur Ableitung von Leckluft ins Freie angeordnet ist, oder
dass zwischen der als Vorratsluftleitung (8) ausgebildeten Leitung und der als Bremsluftleitung (6) ausgebildeten Leitung ein Leitungstrennmantel (9) angeordnet ist, dessen Raum als Ableitungskanal genutzt werden kann.

2. Königszapfen (10) nach dem Anspruch 1, **dadurch gekennzeichnet, dass** die größte Leitung (6, 8) als Vorratsluftleitung (8) ausgebildet ist.

3. Königszapfen (10) nach einem der Ansprüche 1 oder 2, **dadurch gekennzeichnet, dass** die Vorratsluftleitung (8) räumlich getrennt von der Bremsluftleitung (6) angeordnet ist.

4. Königszapfen (10) nach einem der Ansprüche 1 bis 3, **dadurch gekennzeichnet, dass** im Leitungstrennmantel (9) elektrische Daten- und/oder Spannungsversorgungsleitungen (3, 4) angeordnet sind.

5. Königszapfen (10) nach Anspruch 4, **dadurch gekennzeichnet, dass** die Datenleitungen (3) als Punkt zu Punkt-Leitungen ausgebildet sind.

6. Königszapfen (10) nach einem der Ansprüche4 oder 5, **dadurch gekennzeichnet, dass** die Spannungsversorgungsleitungen (4) zur Datenübertragung mittels eines Datenprotokolls ausgebildet sind.

7. Steckverbindungsanordnung (1) für Sattelkupplungen, umfassend
einen Königszapfen (10) nach einem der vorhergehenden Ansprüche, und
eine Sattelplatte,
wobei zwischen der Sattelplatte und dem Königszapfen (10) Schleifkontakte zur Übertragung der Daten und/oder der Spannungsversorgung angeordnet sind.

8. Steckverbindungsanordnung (1) für Sattelkupplungen, umfassend
einen Königszapfen (10) nach einem der vorhergehenden Ansprüche, und eine Sattelplatte,
wobei die Übertragung der Daten und/oder der Spannungsversorgung drahtlos durchgeführt wird.

9. Steckverbindungsanordnung (1) für Sattelkupplungen, umfassend
einen Königszapfen (10) nach einem der vorhergehenden Ansprüche, und eine Sattelplatte,
wobei die Übertragung der Daten und/oder der Spannungsversorgung berührungslos durchgeführt wird.

## Claims

1. A king pin (10) of a semi-trailer, comprising
an upper part of a connector, comprising electric and pneumatic or hydraulic lines (3, 4, 6, 7, 7), which are adapted for being plug-connected to the electric and pneumatic or hydraulic lines of a lower part of a connector, which is located in the fifth-wheel plate of a traction vehicle or tractor unit,
wherein the lines (3, 4, 6, 7, 8) are designed as annularly arranged sockets or receptacles,
wherein the biggest line (6, 8) has on outer diameter exceeding 50 % of the king pin's diameter, measured at the least diameter,
**characterized in that** between a line designed as an air reservoir line (8) and a line designed as an (compressed-)air brake line (6), there is arranged a line designed as a discharge drain (7) for discharging leakage air to the atmosphere, or
that between the line designed as air reservoir line (8) and the line designed as air brake line (6), there is arranged a line separating coat (9), the space of which can be used as a discharge drain.

2. A king pin (10) according to claim 1, **characterized in that** the biggest line (6, 8) is designed as an air reservoir line (8).

3. A king pin (10) according to one of claims 1 or 2, **characterized in that** the air reservoir line (8) is spatially divided from the air brake line (6).

4. A king pin (10) according to one of claims 1 to 3, **characterized in that** electrical data and/or voltage supply lines (3, 4) are arranged in the line separating coat (9).

5. A king pin (10) according to claim 4, **characterized in that** the data lines (3) are designed as point-to-point lines.

6. A king pin (10) according to one of claims 4 or 5, **characterized in that** the voltage supply lines (4) are designed for data transfer by means of a data protocol.

7. A plug connection arrangement (1) for fifth wheels, comprising a king pin (10) according to any one of the preceding claims, and a fifth wheel plate,
wherein between the fifth wheel plate and the king pin (10), sliding contacts are arranged for the transfer of data and/or for voltage supply.

8. A plug connection arrangement (1) for fifth wheels, comprising a king pin (10) according to any one of the preceding claims, and a fifth wheel plate,
wherein the transfer of data and/or the voltage supply is carried out wirelessly.

9. A plug connection arrangement (1) for fifth wheels, comprising a king pin (10) according to any one of the preceding claims, and a fifth wheel plate,
wherein the transfer of data and/or the voltage supply is carried out contactlessly.

## Revendications

1. Pivot central (10) d'un semi-remorque, comprenant
une partie supérieure de liaison enfichable, qui comprend des lignes électriques et pneumatiques ou hydrauliques (3, 4, 6, 7, 8) qui peuvent être reliées par enfichage avec des lignes électriques et pneumatiques ou hydrauliques d'une partie inférieure de liaison enfichable agencée dans la plaque d'attelage d'un véhicule tracteur,
dans lequel les lignes (3, 4, 6, 7, 8) sont réalisées sous forme de douilles d'enfichage agencées sous forme d'anneau,
dans lequel la ligne la plus forte (6, 8) présente un diamètre extérieur supérieur à 50 % du diamètre du pivot central, mesuré au niveau du plus petit diamètre,
**caractérisé en ce que**, entre une ligne réalisée sous forme de ligne à air de réserve (8) et une ligne réalisée sous forme de ligne à air de freinage (6), est agencée une ligne, réalisée sous forme de canal d'évacuation (7) pour l'évacuation des fuites d'air vers l'extérieur, ou bien
**en ce que**, entre la ligne réalisée sous forme de ligne à air de réserve (8) et la ligne réalisée sous forme de ligne à air de freinage (6), est agencée une enveloppe de séparation de lignes, dont le volume peut être utilisé comme canal d'évacuation.

2. Pivot central (10) selon la revendication 1, **caractérisé en ce que** la ligne la plus forte (6, 8) est réalisée sous forme de ligne à air de réserve (8).

3. Pivot central (10) selon l'une des revendications 1 ou 2, **caractérisé en ce que** la ligne à air de réserve (8) est agencée dans l'espace séparément de la ligne à air de freinage (6).

4. Pivot central (10) selon l'une des revendications 1 à 3, **caractérisé en ce que** des lignes de données et/ou des lignes d'alimentation électrique (3, 4) sont agencées dans l'enveloppe de séparation de lignes.

5. Pivot central (10) selon la revendication 4, **caractérisé en ce que** les lignes de données (3) sont réalisées sous forme de lignes point-à-point.

6. Pivot central (10) selon l'une des revendications 4 ou 5, **caractérisé en ce que** les lignes d'alimentation électrique (4) sont réalisées pour la transmission de données au moyen d'un protocole de données.

7. Agencement de liaison enfichable (1) pour des attelages de semi-remorques, comprenant
un pivot central (10) selon l'une des revendications précédentes et une plaque d'attelage,
dans lequel des contacts à frotteur sont agencés entre la plaque d'attelage et le pivot central (10) pour la transmission de données et/ou pour l'alimentation électrique.

8. Agencement de liaison enfichable (1) pour des attelages de semi-remorques, comprenant
un pivot central (10) selon l'une des revendications précédentes, et une plaque d'attelage,
dans lequel la transmission des données et/ou de l'alimentation électrique est exécutée sans fil.

9. Agencement de liaison enfichable (1) pour des attelages de semi-remorques, comprenant
un pivot central (10) selon l'une des revendications précédentes, et une plaque d'attelage,
dans lequel la transmission des données et/ou de l'alimentation électrique est exécutée sans contact.
